# EUROPEAN PATENT SPECIFICATION

(11) **EP 2 184 250 B1**
(45) Date of publication and mention of the grant of the patent: **22.03.2017**
(21) Application number: 09013594.8
(22) Date of filing: 28.10.2009
(51) Int. Cl.: B66B 23/24

(54) **Moving handrail device of passenger conveyor and method for manufacturing the same**
Bewegung einer Handlaufvorrichtung eines Passagierförderers und Herstellungsverfahren dafür
Dispositif de déplacement de mains-courantes d'un convoyeur de passagers et son procédé de fabrication

(30) Priority: 31.10.2008 JP 2008281521
(43) Date of publication of application: 12.05.2010
(73) Proprietor: Mitsubishi Electric Corporation, Tokyo 100-8310 (JP)
(72) Inventor: Honda, Takenobu, Tokyo 100-0006 (JP)
(74) Representative: Hoffmann Eitle

(56) References cited:
- WO-A-2007/018525
- WO-A-2007/075162
- JP-A- 3 249 092
- JP-A- 2005 225 636
- US-A- 4 776 446

## Description

### Technical Field

The present invention relates to a moving handrail device used in a passenger conveyor, such as an escalator and a moving walk, a handrail for use in a passenger conveyor, and a method for manufacturing the handrail for passenger conveyor.

### Background Art

In general, a moving handrail having a C-shaped section is used in a passenger conveyor, such as an escalator and a moving walk, and this moving handrail is driven in synchronization with steps on which a passenger is conveyed during movement (refer to Patent Document 1 and 2, for example).

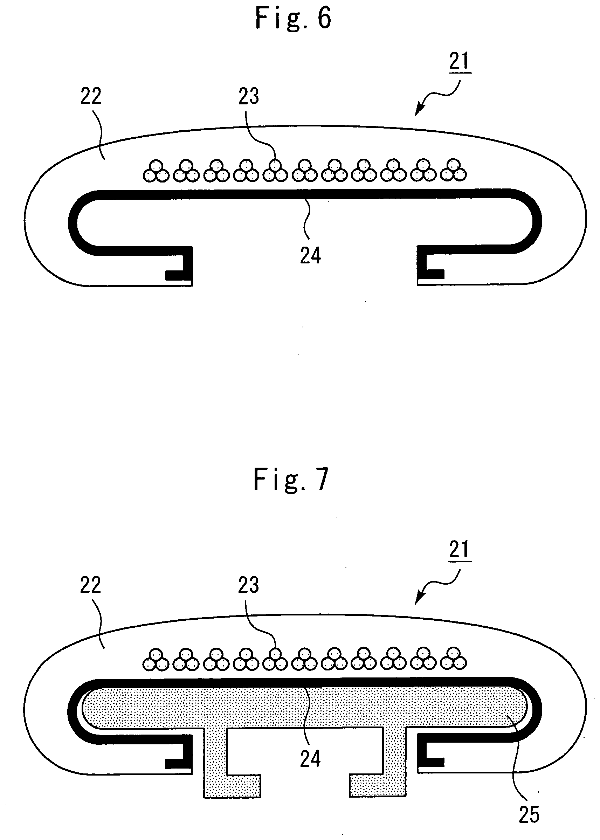

Figures 6 to 9 show the arrangement of conventional general moving handrail devices for passenger conveyor, including those described in Patent Document 1 and 2.

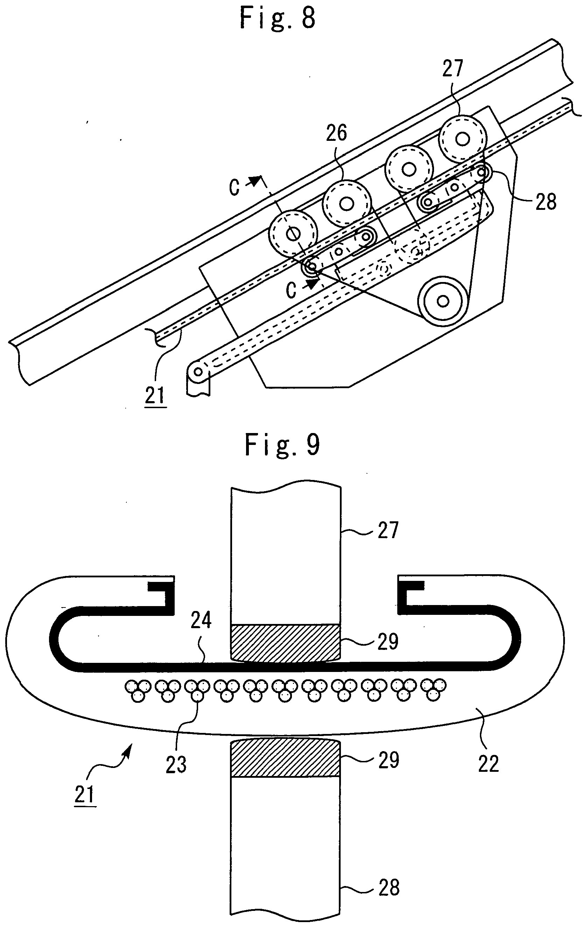

Figures 6 and 7 are sectional views of the essential part showing conventional moving handrail devices for passenger conveyor. Figure 8 is a partial side view of a conventional moving handrail device for passenger conveyor. Figure 9 is a view taken along the C-C line of Figure 8. Concretely, Figure 6 shows the arrangement of a moving handrail, Figure 7 shows the arrangement of a moving handrail and a guide rail, and Figures 8 and 9 show the arrangement of a moving handrail and a moving handrail device.

As shown in Figures 6 and 7, in an endless moving handrail 21 used in a passenger conveyor, generally, a core body 22 made of rubber or resin, such as polyurethane, a tensile body 23 provided in the interior of the core body 22, and a canvas 24 forming an inner surface of the moving handrail 21 constitute the essential part of the moving handrail 21. The above-described canvas 24 is intended for reducing the sliding resistance which occurs when the moving handrail 21 slides on a guide rail 25, and is formed from a woven or knitted fabric of fibers of polyester, nylon and the like.

On the other hand, in a handrail driving device 26 which drives the moving handrail 21, as those shown in Figures 8 and 9, a frictional driving method which uses a driving roller 27 and a pressure roller 28 is often adopted. Concretely, in a handrail driving device 26 of such an arrangement, the moving handrail 21 is sandwiched from above and from below by the driving roller 27 and the pressure roller 28, and the driving roller 27 is rotated in this sandwiched condition, whereby the moving handrail 21 is driven by using the frictional force between the driving roller 27 and the moving handrail 21. Incidentally, each of the surfaces of the driving roller 27 which comes into contact with the inner surface of the moving handrail 21 and of the pressure roller 28 which comes into contact with the grip surface (outer surfaces) of the moving handrail 21 which passengers grip is generally coated with an elastic body 29 of polyurethane resin and the like for the purpose of increasing the driving force and protecting the friction surfaces.

Patent Document 1: Japanese Patent Laid-Open No. 2008-133073A
Patent Document 2: Japanese Patent Laid-Open No. 2005-225636A

As a further prior art document, US 4,776,446 A is known. This document refers to a handrail, which is extruded from an elastomeric polymeric material, such as polyurethane, to form a body member having a substantially C-shaped cross-section. The handrail comprises a wear strip, which may comprise longitudinally spaced slots.

### Disclosure of the Invention

### Problems to be Solved by the Invention

In conventional moving handrails used in a passenger conveyor, including those described in Patent Document 1 and 2, both the guidance by the guide rail and the driving by the handrail driving device have been performed via a canvas provided on the inner surface of the moving handrail. As described above, the canvas is intended for reducing the sliding resistance which occurs when the moving handrail slides on the guide rail and is made of a material having low friction properties. For this reason, in the handrail driving device, it has been necessary for the driving roller to be strongly pressed against (the canvas of) the moving handrail in order to obtain a sufficient driving force for driving the moving handrail.

If the pressure with which the driving roller is pressed against the moving handrail (hereinafter simply referred to as the "pressing force") is high, this has posed the problem that the progress of wear of the inner and outer surfaces of the driving roller, the pressure roller and the moving handrail becomes fast, with the result that the generation of wear particles increases. Incidentally, in the case where wear particles adhere to the surface of the driving roller and the inner surface of the moving handrail, slip and the like occur in the driving roller and a sufficient driving force is not transmitted to the moving handrail. For this reason, the speed of the moving handrail becomes low and a mismatch in the synchronization between the moving handrail and a step increases, thereby posing the problem that frequent adjustments by professional engineers become necessary.

Incidentally, when the above-described pressing force by the handrail driving device is high, this poses a further problem of the generation of impressions on the grip surface of the moving handrail, resulting in a worsening of the appearance of the passenger conveyor and the instability in the speed and operating condition of the moving handrail. Also, because of the high pressing force, surfaces of the driving roller and the pressure roller might exfoliate and the life might become short due to wear.

The present invention has been made to solve problems as described above and the object of the invention is to provide a moving handrail device of a passenger conveyor which can simultaneously reduce the sliding resistance occurring due to the sliding of a moving handrail on a guide rail and the pressing force of a driving roller required by a handrail driving device, and a handrail for passenger conveyor capable of realizing the above-described effect and a method for manufacturing the handrail for passenger conveyor.

### Means for Solving the Problems

A moving handrail device comprising the features of claim 1 and a method for manufacturing a handrail for a passenger conveyor according to claim 9 solve the above-mentioned problems. Further preferred embodiments are set forth in the dependent claims.

### Effect of the Invention

According to the present invention, in a passenger conveyor, it becomes possible to simultaneously reduce the sliding resistance occurring due to the sliding of a moving handrail on a guide rail and the pressing force of a driving roller required by a handrail driving device.

### Best Mode of Carrying Out the Invention

The present invention will be described in more detail with reference to the accompanying drawings. Incidentally, in each of the drawings, like numerals refer to like or similar parts and overlaps of description of these parts are appropriately simplified or omitted.

### First Embodiment

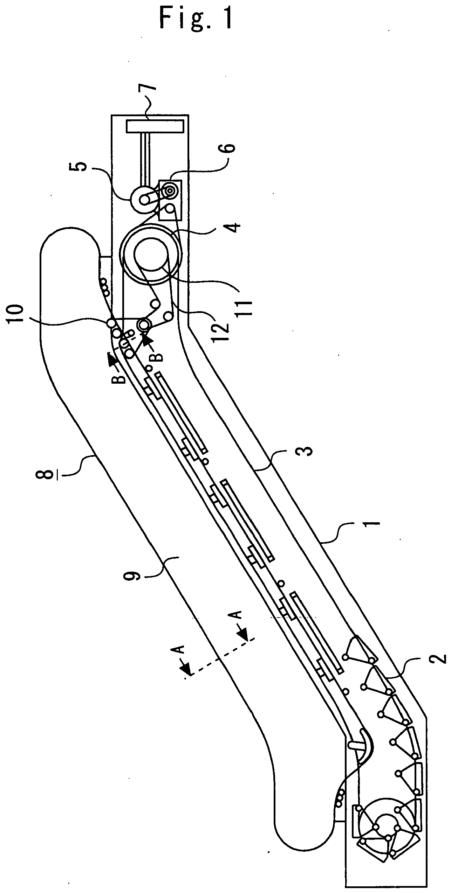

Figure 1 is a side view showing the general arrangement of a passenger conveyor. In the following, a concrete description will be given of the arrangement of an escalator used for the movement between upper and lower floors as an example of a passenger conveyor, and descriptions of other examples, such as a moving walk, are omitted.

In Figure 1, reference numeral 1 denotes a truss of an escalator spanned between upper and lower floors. The deadweight and payload of the escalator are supported by this truss 1. Reference numeral 2 denotes steps on which passengers are conveyed while moving between upper and lower floors. Reference numeral 3 denotes an endless step chain to which the steps 2 are connected. Reference numeral 4 denotes a step driving sprocket around which the step chain 3 is wounded. Reference numeral 5 denotes a driving motor for driving the step driving sprocket 4 and the like. Reference numeral 6 denotes a reduction gear which decelerates the output of the driving motor 5 and rotates the step driving sprocket 4 via a chain. Reference numeral 7 denotes a control panel which performs the operation control of the escalator, such as the control of the driving motor 5.

Reference numeral 8 denotes a moving handrail which is driven in synchronization with the above-described steps 2. This moving handrail 8 is endless and the upper side of the moving handrail 8 moves along an upper end portion of a balustrade 9 erected on both sides of the steps 2. The moving handrail 8 is vertically inverted at upper and lower landing entrances of the escalator, and the lower side is arranged within skirt guard and the like provided on both sides of the steps 2.

Reference numeral 10 denotes a handrail driving device for driving the moving handrail 8. This handrail driving device 10 drives the moving handrail 8 by a friction moving method as with the conventional handrail driving device shown in Figure 8. Incidentally, concrete arrangements of the moving handrail 8 and the handrail driving device 10 will be described later.

Reference numeral 11 denotes a handrail driving sprocket provided coaxially with the step driving sprocket 4 and reference numeral 12 denotes a handrail chain for transmitting the rotational force of the handrail driving sprocket 11 to the handrail driving device 10. That is, the handrail driving sprocket 11 rotates together with the step driving sprocket 4 by the driving force of the driving motor 5, whereby the driving force is transmitted to the handrail driving device 10 via the handrail chain 12. And the moving handrail 8 is driven by the handrail driving device 10 and circulates between the upper and lower landing entrances in synchronization with the steps 2.

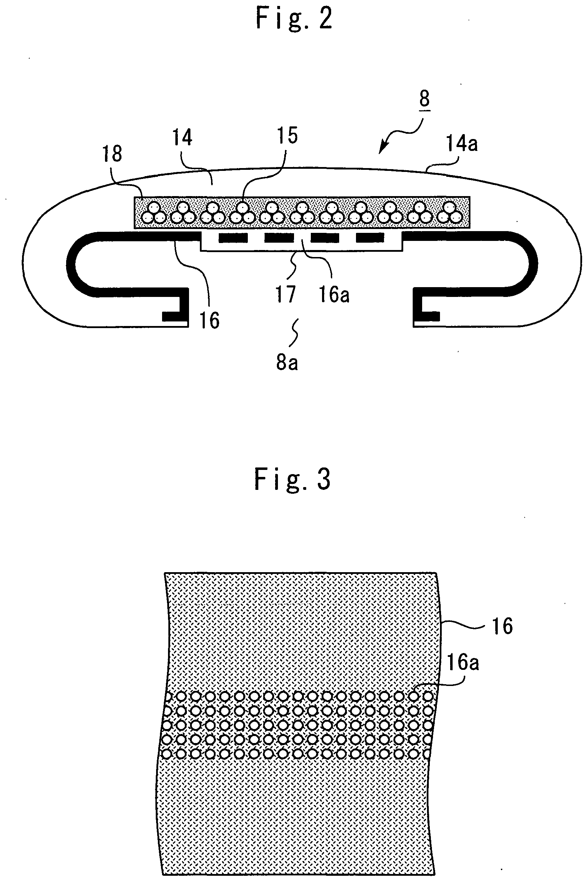

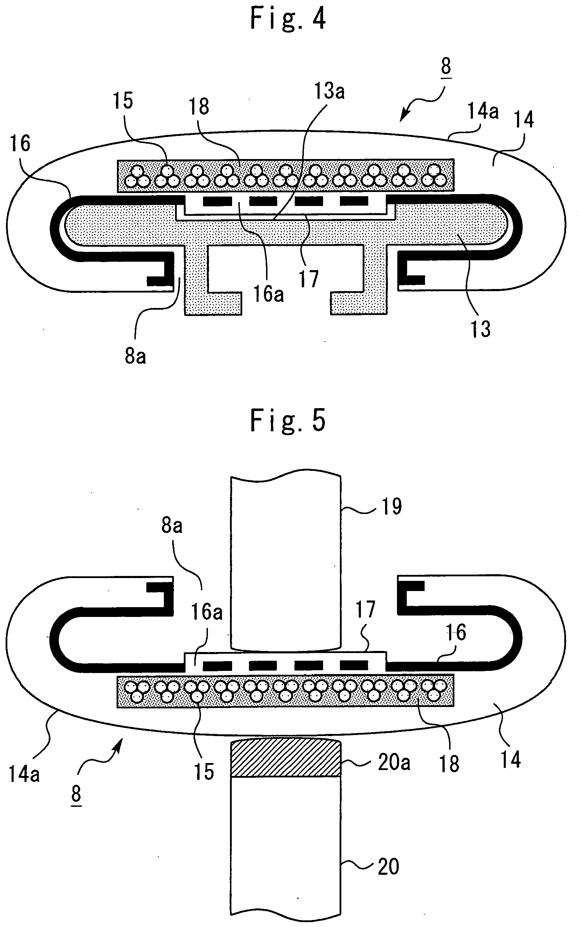

Next, the moving handrail device in the present invention will be described. Figures 2, 4 and 5 are sectional views of the essential part showing moving handrail devices for the passenger conveyor in the first embodiment of the present invention, and Figure 3 is a diagram showing a low-friction member of Figure 2. Incidentally, Figures 2 and 4 correspond to views taken along the A-A line of Figure 1, and Figure 5 corresponds to a view taken along the B-B line of Figure 1. Figure 2 shows only the arrangement of the moving handrail 8.

The moving handrail 8 has a roughly C-shaped cross section (section in the short side direction), and in order to achieve the above-described object, on the inner surface of the moving handrail 8, there are formed a high-friction portion and a low-friction portion along the longitudinal direction. The high-friction portion has a function of efficiently transmitting the driving force of the handrail driving device 10 to the moving handrail 8 and has higher friction properties (a higher coefficient of friction) than the low-friction portion.

On the other hand, the low-friction portion has a function of reducing the sliding resistance which occurs when the moving handrail 8 slides on a guide rail 13, and has lower friction properties (a lower coefficient of friction) than the high-friction portion. Incidentally, the guide rail 13 is intended for guiding the movement of the moving handrail 8. Concretely, the guide rail 13 is provided in the upper end portion of the balustrade 9 and both curved portions of the balustrade 9 in the vicinity of the upper and lower landing entrances, and guides the movement of the upper side and each inverting portion of the moving handrail 8.

In the following, with reference to Figures 2 to 5, a description will be given of concrete examples of the moving handrail 8 provided with the above-described high-friction portion and low-friction portion.

As is apparent from the details shown in Figure 2 etc., for example, a core body 14, a tensile body 15, a low-friction member 16 and a high-friction member 17 constitute the essential part of the moving handrail 8.

The core body 14 constitutes the essential part of the moving handrail 8, and is formed to provide a C-shaped cross section in an endless condition. In this core body 14, an outer surface 14a thereof constitutes a grip surface which a passenger grips while being conveyed on the steps 2. Incidentally, Figures 2 to 5 show a case where the core body 14 is made of one kind of elastic body of rubber or resin, such as polyurethane. However, the core body 14 is not limited to the above-described arrangement and the core body 14 may be formed from a plurality of layers or the like, for example, to suit the function and the like given to the moving handrail 8.

The tensile body 15 is intended for preventing the elongation of the moving handrail 8 by giving a prescribed tensile strength thereto. This tensile body 15 is formed from, for example, a wire, sheet and the like made of steel, and is provided in the interior of the core body 14 along the longitudinal direction thereof. Incidentally, reference numeral 18 denotes a fixing resin for integrating the plurality of tensile bodies 15. Before being buried in the core body 14, the plurality of tensile bodies 15 to be arranged within the core body 14 are integrated by this fixing resin 18.

The low-friction member 16 is formed from a sheet-like material or cloth (woven or knitted fabric)-like material having low friction properties, and is provided on the inner surface of the core body 14 having a C-shaped cross section along the longitudinal direction of the core body 14. In the low-friction member 16, as shown in Figure 3, a large number of through holes 16a are formed along the longitudinal direction of the low-friction member 16, and the through holes 16a are arranged along the longitudinal direction of the core body 14 so as to be opposed to an opening 8a formed in the core body 14 (moving handrail 8). Incidentally, the above-described opening 8a is a gap on the opposite side of the grip surface, which is formed between both end portions of the core body 14 (moving handrail 8) since the core body 14 (moving handrail 8) has a C-shaped cross section.

In addition to materials having low friction properties used in conventional canvases, for example, polyester and nylon, canvases and the like using PTFE fibers having lower friction properties are adopted as the material for the above-described low-friction member 16. For example, a sheet containing a fluororesin converted into fibers (hereinafter referred to as "fluororesin fibers"), a felt containing fluororesin fibers, and a woven or knitted fabric containing fluororesin fibers can be adopted as the low-friction member 16. Incidentally, examples of such materials include "TOYOFRON" (registered trademark in Japan) made by TORAY INDUSTRIES INC. and "Tomifleck F" made by TOMOEGAWA Co., Ltd. When fibers having low friction properties are not used, the low-friction member 16 may be formed by filling a PTFE material or a solid lubricating material, such as molybdenum bisulfide and graphite, or causing these materials to be mixed or impregnated in resin when a fabric is woven with usual fibers.

The high-friction member 17 is formed from a member having higher friction properties than the low-friction member 16, and is provided along the longitudinal direction of the core body 14 (moving handrail 8) so that the surface of the high-friction member 17 forms part of the inner surface of the moving handrail 8. Incidentally, in this embodiment, the case where the high-friction member 17 is formed integrally with the core body 14 is shown as an example. Concretely, in the forming of the core body 14, part of the raw material, such as resin, constituting the core body 14 is extruded from the through holes 16a of the low-friction member 16 to the front surface side of the low-friction member 16 (inner surface side of the moving handrail 8) and is formed to provide a thin convexity on the front surface of the low-friction member 16, whereby the high-friction member 17 is completed. For this reason, the high-friction member 17 is arranged along the longitudinal direction of the core body 14 (moving handrail 8) so as to be opposed to the opening 8a in a manner corresponding to the positions of the through holes 16a.

In the moving handrail 8 having the above-described arrangement, the above-described high-friction portion is formed from the high-friction member 17, i.e., part of the core body 14, and the above-described low-friction portion is formed from part of the low-friction member 16 excepting the part where the surface is covered with the high-friction member 17. That is, the low-friction portion is formed on both sides of the high-friction portion along the longitudinal direction of the moving handrail 8, and the high-friction portion is formed convexly in the middle part of the inner surface of the moving handrail 8 so as to protrude from the surface of the adjacent low-friction portion.

Next, a concrete description will be given of the arrangements of the guide rail 13 for guiding the movement of the moving handrail 8 of the above-described arrangement and of the handrail driving device 10 for driving the moving handrail 8.

As is apparent from the details shown in Figure 4, the outer shape of the guide rail 13 has a T-shaped cross section, and the guide rail 13 enters the space in the middle part of the moving handrail 8 from the above-described opening 8a and comes into contact with the inner surface of the moving handrail 8. And in the middle part of the upper surface, there is formed a concavity 13a having a prescribed width and depth along the longitudinal direction, and the above-described high-friction member 17 of the moving handrail 8 which slides on the upper surface is housed in this concavity 13a. That is, the concavity 13a is arranged in a position opposed to the high-friction portion of the moving handrail 8 and is formed to have a width larger than the width of the high-friction portion and a depth larger than the protruding amount of the high-friction portion. For this reason, the guide rail 13 comes into contact with only the low-friction portion formed on the moving handrail 8 and does not come into contact with the high-friction portion.

On the other hand, as described above, a frictional driving method is adopted in the handrail driving device 10, and the handrail driving device 10 has the same arrangement as shown in Figure 8 on the whole. That is, the handrail driving device 10 sandwiches the moving handrail 8 from above and from below by use of a driving roller 19 and a pressure roller 20 and rotates the driving roller 19 in this sandwiched condition, thereby driving the moving handrail 8 by using the frictional force between the driving roller 19 and the moving handrail 21.

The driving roller 19 enters the space in the middle part of the moving handrail 8 from the above-described opening 8a, comes into contact with the inner surface of the moving handrail 8, and drives the moving handrail 8 by the frictional force during rotation. Because in the portion opposed to the opening 8a on the inner surface of the moving handrail 8, the high-friction member 17 is formed convexly as described above, the driving roller 19 comes into contact with only the high-friction portion on the inner surface of the moving handrail 8, and does not come into contact with the low-friction portion. Incidentally, the driving roller 19, including the portion which comes into contact with the inner surface of the moving handrail 8, is made of metal (for example, steel).

On the other hand, the pressure roller 20 comes into contact with the grip surface of the moving handrail 8 and functions to press the moving handrail 8 against the driving roller 19 side. Incidentally, a portion of the pressure roller 20 which comes into contact with the above-described grip surface is coated with an elastic body 20a of polyurethane resin and the like for the purpose of protecting the grip surface in the same manner as in a conventional pressure roller.

Next, a concrete description will be given of a method for manufacturing the moving handrail 8 having the above-described arrangement.

In the manufacture of the moving handrail 8, first, after the fabrication of a long handrail main body having the same arrangement of the moving handrail 8 shown in Figure 2, this handrail main body is cut to a prescribed length and both end portions thereof are connected, whereby an endless (annular) moving handrail 8 is completed. For this reason, in this embodiment, a procedure for manufacturing the above-described handrail main body will be concretely described.

Although various manufacturing methods of the handrail main body are conceivable, in the following a detailed description will be given of a case where the handrail main body is manufactured by extrusion having excellent manufacturability. Incidentally, in this description, a detailed description will be given of a case where a woven or knitted fabric formed from fluororesin fibers having especially low friction properties is adopted as the low-friction member 16 and a polyurethane elastomer which is suitable for extrusion and has friction properties after forming by far higher than the friction properties of the low-friction member 16 is used as the raw material for the core body 14 is adopted.

In the manufacture of the handrail main body, a tensile body 15 and a low-friction member 16 which have the above-described construction are prepared beforehand. And before extrusion is performed, the above-described tensile body 15 and low-friction member 16 are subjected to the following treatment.

For the tensile body 15, a plurality of tensile bodies 15 to be arranged within the handrail main body are integrated beforehand by using a prescribed raw material excellent in adhesion to the above-described polyurethane elastomer. That is, portions other than the integrated tensile bodies 15 correspond to a fixing resin 18 in Figure 2.

For the low-friction member 16, a prescribed raw material excellent in adhesion to the above-described polyurethane elastomer is caused to be impregnated beforehand with the exception of the counter adhesion surface, or the low-friction member 16 is coated beforehand with the above-described prescribed raw material.

And after the above-described treatment is performed, a handrail main body having a C-shaped cross section is formed by extrusion in such a manner that the low-friction member 16 is arranged on the inner surface of the handrail mail body. At this time, the tensile bodies 15 are buried in the interior of the handrail main body and arranged along the longitudinal direction of the handrail main body.

Incidentally, during the extrusion of the handrail main body, an impregnated or coated resin for the low-friction member 16 and the fixing resin 18 around the tensile bodies 15 for the tensile bodies 15 are caused to adhere to a molten polyurethane elastomer and, therefore, after the forming of the handrail main body, both the low-friction member 16 and the tensile bodies 15 are integrated with the core body 14 and strongly fixed.

During extrusion, part of the polyurethane elastomer, which is the raw material for the core body 14, passes through the through holes 16a from the back surface side of the low-friction member 16 and moves to the front surface side of the low-friction member 16 (inner surface side of the handrail main body), and the polyurethane elastomer is formed on the front surface of the low-friction member 16 to provide a thin convexity. That is, the polyurethane elastomer is extruded by the pressure during extrusion to the front surface side of the low-friction member 16, and the high-friction portion is formed on the inner surface of the handrail main body at the same time with molding the handrail main body.

After the above-described procedure is followed, a long handrail main body having the high-friction portion and the low-friction portion on the inner surface thereof is completed.

According to the first embodiment of the present invention, in a passenger conveyor, it becomes possible to simultaneously reduce the sliding resistance occurring due to the sliding of the moving handrail 8 on the guide rail 13 and the pressing force of the driving roller 19 required by the handrail driving device 10.

Because the high-friction portion is formed on the inner surface of the moving handrail 8 (or the handrail main body) along the longitudinal direction thereof, it is possible to efficiently transmit the driving force of the handrail driving device 10 to the moving handrail 8 by bringing the driving roller 19 of the handrail driving device 10 into contact with this high-friction portion. That is, even when the pressing force of the driving roller 19 is set at a low value, it is possible to obtain a sufficient frictional force necessary for driving the moving handrail 8 by rotating the driving roller 19 which is brought into contact with the high-friction portion. Particularly, if the driving roller 19 is brought into contact with only the high-friction portion, it is possible to substantially increase the transmission efficiency of the driving force from conventional levels, and it is possible to miniaturize the handrail driving device 10.

By forming the high-friction portion integrally with the core body 14 (from part of the resin or the like constituting the core body 14), it becomes also possible to increase the adhesion strength of the high-friction portion and to prevent the exfoliation of the high-friction portion.

In the case where the above-described high-friction portion is arranged in a position opposed to the opening 8a formed in the moving handrail 8 along the longitudinal direction of the moving handrail 8, it becomes possible to produce the above-described effect without a change of the arrangement of the handrail driving device 10 from a conventional arrangement. That is, it becomes easy to apply the handrail driving device 10 to an existing passenger conveyor.

Incidentally, because the above-described high-friction portion is formed from a polyurethane elastomer having high friction properties and the like, it is unnecessary to take measures for increasing the frictional force, such as coating the surface of the driving roller 19 with polyurethane resin, as with conventional moving handrail devices. That is, it becomes possible to form (the surface of) the driving roller 19 from metal, and it is possible to substantially decrease the generation of wear particles from the driving roller 19 and the inner surface of the moving handrail 8. Therefore, it is possible to positively prevent problems caused by the generation of wear particles, for example, a mismatch in the synchronization between the moving handrail 8 and the steps 2, and it becomes possible to reduce the manpower for maintenance. Also, problems such as the wear and exfoliation of surface portions of the driving roller 19 do not occur any more.

Incidentally, after the installation of a passenger conveyor in a building, water used in cleaning, rainwater and the like may sometimes adhere to the moving handrail 8. For this reason, when the driving roller 19 of the above-described arrangement is adopted, it is effective to subject the surface of the driving roller 19 to shot blasting and knurling.

On the other hand, on the inner surface of the moving handrail 8 (or the handrail main body), in addition to the above-described high-friction portion, the low-friction portion is formed along the longitudinal direction of the moving handrail 8. For this reason, in the case where the guidance of the moving handrail 8 by the guide rail 13 is performed via this low-friction portion, it becomes possible to reduce also the sliding resistance in addition to the reduction of the pressing force required by the handrail driving device 10. If the guide rail 13 is brought into contact with only the low-friction portion, for example, by forming the concavity 13a on the upper surface of the guide rail 13, then it is possible to substantially reduce the sliding resistance and also further miniaturization of the handrail driving device 10 becomes possible.

Incidentally, when the high-friction portion is formed in a position opposed to the opening 8a, the low-friction portion is arranged, for example, on both sides of the high-friction portion along the longitudinal direction of the moving handrail 8. If this arrangement is adopted, it becomes possible to guide the moving handrail 8 without impairing the stability during movement.

Unlike a conventional moving handrail in which both the guidance function by the guide rail and the driving function by the handrail driving device are realized via the same canvas, in the moving handrail 8 of the above-described arrangement, even the adoption of a low-friction portion having particularly low friction properties as the above-described low-friction portion (low-friction member 16) does not affect the function of driving the moving handrail 8. That is, as the low-friction portion, it is possible to adopt materials having exceedingly low friction properties, such as fluororesin fibers, which were incapable of being adopted in conventional canvases. For this reason, it becomes possible to substantially reduce the sliding resistance which occurs due to the sliding of the moving handrail 8 on the guide rail 13 from conventional levels. Furthermore, because of the small sliding resistance, also the operating condition of the moving handrail 8 becomes stable for a long period.

Incidentally, when materials having particularly low friction properties (for example, a woven or knitted fabric or a sheet formed from fluororesin fibers) are adopted as the low-friction portion, it is probably difficult to cause the member constituting the low-friction portion (in this embodiment, the low-friction member 16) to adhere to the resin or the like constituting the core body 14 (in this embodiment, a polyurethane elastomer). In this case, for example, by forming the member constituting the low-friction portion from a woven or knitted fabric, the resin and the like constituting the core body 14 are caused to be impregnated between fibers and the above-described member is integrated with the core body 14 by the shearing force of the impregnated resin and the like. Or alternatively, as with the low-friction member 16 in this embodiment, a porous member is adopted as the low-friction portion and is integrated with the core body 14.

Incidentally, various effects as described below can be expected by forming part of the core body 14 which has passed through the through holes 16a of the low-friction member 16 to make the high-friction portion (high-friction member 17) as with the moving handrail 8 in this embodiment.

First, the adhesion strength of the high-friction portion is substantially improved and it is possible to positively prevent the exfoliation of the high-friction portion.

Also, because the high-friction portion has the function of fixing the low-friction member 16 to the core body 14, it is also possible to prevent the exfoliation of the low-friction member 16. In addition to the arrangement of the moving handrail 8 in this embodiment, it is also conceivable to form the high-friction portion by causing a prescribed resin and the like to adhere to the surface of the low-friction member. However, in such an arrangement, the adhesion strength of the high-friction portion depends on the adhesion strength of the low-friction member 16 to the core body 14 and, therefore, it is impossible to adopt a material from which the adhesion strength to the core body 14 cannot be expected as the low-friction member 16. However, with the arrangement of the moving handrail 8 in this embodiment, it is possible to solve such problems. For this reason, even when a woven or knitted fabric and the like formed from fluororesin fibers for which adhesion to the core body 14 is difficult is adopted as the low-friction member 16, it is possible to positively prevent the exfoliation of the low-friction member 16 and it is possible to extend the life of the moving handrail 8.

On the other hand, in the manufacture of the moving handrail 8 (handrail main body), by adopting the low-friction member 16 having a large number of through holes 16a, it is possible to form the high-friction portion at the same time with molding the handrail main body by using the pressure during extrusion. For this reason, it is possible to save the manpower necessary for causing a resin and the like, which become the high-friction portion, on the surface of the low-friction member 16 and it becomes possible to improve manufacturability.

Incidentally, when the low-friction member 16 is formed from a woven or knitted fabric and a porous material, the low-friction member 16 is elongated in the longitudinal direction by the tension received during the manufacture of the handrail main body, with the result that the through holes 16a may be clogged up and the low-friction member 16 may be torn to pieces. To prevent such problems, particularly when the low-friction member 16 of the above-described arrangement is used, before the molding of the handrail main body, it is advisable to cause a prescribed resin to be impregnated beforehand or to coat the low-friction member 16 with the above-described prescribed raw material beforehand.

In the case where the tensile bodies 15 are caused to adhere to the core body 14, it is necessary to perform vulcanizing adhesion under heating and pressurization conditions for a given period of time when the core body 14 is made of rubber, and it is necessary to perform heating treatment after the application of an adhesive when the core body 14 is made of polyurethane and the like. For this reason, it is desirable to perform the adhesion treatment of the tensile bodies 15 before the forming of the handrail main body and to cause the fixing resin 18 to adhere to a resin and the like constituting the core body 14 rather than performing the adhesion treatment of the tensile bodies 15 during the forming of the handrail main body. By adopting such a manufacturing method, it becomes possible to simplify equipment and to stabilize products.

### Brief of Description of the Drawings

Figure 1 is a side view showing the general arrangement of a passenger conveyor.
Figure 2 is a sectional view of the essential part showing moving a handrail device for the passenger conveyor in the first embodiment of the present invention.
Figure 3 is a diagram showing a low-friction member of Figure 2.
Figure 4 is a sectional view of the essential part showing moving a handrail device for the passenger conveyor in the first embodiment of the present invention.
Figure 5 is a sectional view of the essential part showing moving a handrail device for the passenger conveyor in the first embodiment of the present invention.
Figure 6 is a sectional view of the essential part showing a conventional moving handrail device for passenger conveyor.
Figure 7 is a sectional view of the essential part showing a conventional moving handrail device for passenger conveyor.
Figure 8 is a partial side view of a conventional moving handrail device for passenger conveyor.
Figure 9 is a view taken along the C-C line of Figure 8.

### Description of symbols

1 truss, 2 step, 3 step chain, 4 step driving sprocket, 5 driving motor, 6 reduction gear, 7 control panel, 8 moving handrail, 8a opening, 9 balustrade, 10 handrail driving device, 11 handrail driving sprocket, 12 handrail chain, 13 guide rail, 13a concavity, 14 core body, 14a outer surface, 15 tensile body, 16 low-friction member, 16a through hole, 17 high-friction member, 18 fixing resin, 19 driving roller, 20 pressure roller, 20a elastic body, 21 moving handrail, 22 core body, 23 tensile body, 24 canvas, 25 guide rail, 26 handrail driving device, 27 driving roller, 28 pressure roller, 29 elastic body

## Claims

1. A moving handrail device of passenger conveyor provided with an endless moving handrail (8) having a C-shaped cross section, comprising:
a high-friction portion which is formed on an inner surface of the moving handrail (8) along a longitudinal direction of the moving handrail (8); and
a low-friction portion which is formed on the inner surface of the moving handrail (8) along the longitudinal direction of the moving handrail (8) and has lower friction properties than the high-friction portion, wherein
the moving handrail (8) comprises
a core body (14) which has a C-shaped cross section and an outer surface (14a) of which forms a grip surface, and
a low-friction member (16) which is provided on an inner surface of the core body (14) along a longitudinal direction of the core body (14) and in which a large number of through holes (16a) are formed along the longitudinal direction of the core body (14), wherein
the low-friction portion is formed from part of the low-friction member (16), **characterized in that**
the high-friction portion is formed from part of the core body (14) which is arranged on a front surface side of the low-friction member (16) so as to protrude from the front surface of the low-friction member (16) by passing through the through holes (16a) formed in the low-friction member (16).

2. The moving handrail device of passenger conveyor according to claim 1, wherein
the high-friction portion is arranged along the longitudinal direction of the moving handrail (8) so as to be opposed to an opening (8a) formed in the moving handrail (8); and
the low-friction portion is arranged on both sides of the high-friction portion along the longitudinal direction of the moving handrail (8).

3. The moving handrail device of passenger conveyor according to claim 1 or 2, wherein the low-friction portion is formed from at least any one of the group consisting of a sheet containing fluororesin fibers, a felt containing fluororesin fibers and a woven or knitted fabric containing fluororesin fibers.

4. The moving handrail device of passenger conveyor according to any one of claims 1 to 3, wherein the high-friction portion is made of a polyurethane elastomer.

5. The moving handrail device of passenger conveyor according to any one of claims 1 to 4, further comprising:
a driving roller (19) which comes into contact with the inner surface of the moving handrail (8) from the opening (8a) formed in the moving handrail (8) and drives the moving handrail (8) by a frictional force during rotation; and
wherein the driving roller (19) comes into contact with the high-friction portion formed on the inner surface of the moving handrail (8) and does not come into contact with the low-friction portion.

6. The moving handrail device of passenger conveyor according to claim 5, further comprising:
a pressure roller (20) which presses the moving handrail (8) against a driving roller (19) side by coming into contact with the grip surface of the moving handrail (8); and
wherein the driving roller (19) is such that a portion which comes into contact with the high-friction portion is made of a metal, and
the pressure roller (20) is such that a portion which comes into contact with the grip surface is made of an elastic body (20a) of resin and the like.

7. The moving handrail device of passenger conveyor according to any one of claims 1 to 4, further comprising:
a guide rail (13) which comes into contact with the inner surface of the moving handrail (8) from the opening (8a) formed in the moving handrail (8) and guides the movement of the moving handrail (8); and
wherein the guide rail (13) comes into contact with the low-friction portion formed on the inner surface of the moving handrail (8) and does not come into contact with the high-friction portion.

8. The moving handrail device of passenger conveyor according to claim 7, wherein the guide rail (13) is such that in a position opposed to a high-friction portion formed on the inner surface of the moving handrail (8), there is formed a concavity (13a) having a larger width than the high-friction portion.

9. A method for manufacturing a handrail for passenger conveyor, comprising:
preparing a low-friction member (16) in which a large number of through holes (16a) are formed along a longitudinal direction;
forming a handrail main body having a C-shaped cross section so that the low-friction member (16) is arranged at least as part of an inner surface by using a prescribed raw material having friction properties after forming higher than the friction properties of the low-friction member (16) in at least part of the handrail main body; and **characterized by**:
forming the high-friction portion made of the prescribed raw material on the inner surface of the handrail main body along the longitudinal direction of the handrail main body by arranging the prescribed raw material on a front surface of the low-friction member (16) so as to protrude from the front surface of the low-friction member (16) by causing the prescribed raw material to pass through the through holes (16a) formed in the low-friction member (16).

10. The method for manufacturing a handrail for passenger conveyor according to claim 9, further comprising:
causing a prescribed raw material having excellent adhesion to a raw material constituting the handrail main body to be impregnated in the low-friction member (16) or coating the low-friction member (16) with the prescribed raw material before forming the handrail main body.

11. The method for manufacturing a handrail for passenger conveyor according to claim 9, further comprising:
integrating tensile bodies (15) to be arranged within the handrail main body by use of a prescribed raw material having excellent adhesion to a raw material constituting the handrail main body before forming the handrail main body.

12. The method for manufacturing a handrail for passenger conveyor according to any one of claims 9 to 11, wherein by forming the handrail main body by extrusion, the high-friction portion is formed on the inner surface of the handrail main body at the same time with molding the handrail main body.

## Patentansprüche

1. Bewegliche Handlaufvorrichtung eines Personenbeförderers mit einem endlos beweglichen Handlauf (8), der einen C-förmigen Querschnitt aufweist, umfassend:
einen Hochreibungsabschnitt, der an einer Innenfläche des beweglichen Handlaufs (8) entlang einer Längsrichtung des beweglichen Handlaufs (8) ausgebildet ist; und
einen Niedrigreibungsabschnitt, der an der Innenfläche des beweglichen Handlaufs (8) entlang der Längsrichtung des beweglichen Handlaufs (8) ausgebildet ist und niedrigere Reibungseigenschaften als der Hochreibungsabschnitt aufweist, wobei
der bewegliche Handlauf (8) umfasst
einen Kernkörper (14), der einen C-förmigen Querschnitt und eine Außenfläche (14a), die eine Greiffläche bildet, aufweist, und
ein Niedrigreibungselement (16), das auf einer Innenfläche des Kernkörpers (14) entlang einer Längsrichtung des Kernkörpers (14) vorgesehen ist und in dem eine große Anzahl von Durchgangsbohrungen (16a) entlang der Längsrichtung des Kernkörpers (14) ausgebildet ist, wobei
der Niedrigreibungsabschnitt aus einem Teil des Niedrigreibungselement (16) ausgebildet ist, **dadurch gekennzeichnet, dass**
der Hochreibungsabschnitt aus einem Teil des Kernkörpers (14) ausgebildet ist, der an einer Stirnflächenseite des Niedrigreibungselements (16) so vorgesehen ist, dass es von der Stirnfläche des Niedrigreibungselements (16) vorsteht, indem es durch die in dem Niedrigreibungselement (16) ausgebildeten Durchgangsbohrungen (16a) hindurchsteht.

2. Bewegliche Handlaufvorrichtung eines Personenbeförderers nach Anspruch 1, wobei
der Hochreibungsabschnitt entlang der Längsrichtung des beweglichen Handlaufs (8) so vorgesehen ist, dass er einer in dem beweglichen Handlauf (8) ausgebildeten Öffnung (8a) gegenüberliegt; und
der Niedrigreibungsabschnitt entlang der Längsrichtung des beweglichen Handlaufs (8) auf beiden Seiten des Hochreibungsabschnitts angeordnet ist.

3. Bewegliche Handlaufvorrichtung eines Personenbeförderers nach Anspruch 1 oder 2, wobei der Niedrigreibungsabschnitt aus mindestens einem aus der Gruppe bestehend aus, ein Fluorharzfasern enthaltendes Sheet, ein Fluorharzfasern enthaltender Filz und ein Flurharzfasern enthaltenes Gewebe oder Gewirk, ausgebildet ist.

4. Bewegliche Handlaufvorrichtung eines Personenbeförderers nach einem der Ansprüche 1 bis 3, wobei der Hochreibungsabschnitt aus einem Polyurethan-Elastomer hergestellt ist.

5. Bewegliche Handlaufvorrichtung eines Personenbeförderers nach einem der Ansprüche 1 bis 4, ferner umfassend:
eine Antriebsrolle (19), die mit der Innenfläche des beweglichen Handlaufs (8) von der in dem Handlauf (8) ausgebildeten Öffnung (8a) in Kontakt kommt und den beweglichen Handlauf (8) durch eine Reibungskraft während der Rotation antreibt; und
wobei die Antriebsrolle (19) mit dem an der Innenfläche des beweglichen Handlaufs (8) ausgebildeten Hochreibungsabschnitt in Kontakt kommt und nicht mit dem Niedrigreibungsabschnitt in Kontakt kommt.

6. Bewegliche Handlaufvorrichtung eines Personenbeförderers nach Anspruch 5, ferner umfassend:
eine Andrückrolle (20), die durch in Kontakt kommen mit der Grifffläche des beweglichen Handlaufs (8) den beweglichen Handlauf (8) gegen eine Seite der Antriebsrolle (19) drückt; und
wobei die Antriebsrolle (19) derart ausgebildet ist, dass ein Abschnitt, der mit dem Hochreibungsabschnitt in Kontakt kommt, aus einem Metall ist, und
die Andrückrolle (20) derart ausgebildet ist, dass ein Abschnitt, der mit der Grifffläche in Kontakt kommt, aus einem elastischen Körper (20a) aus Harz und dergleichen ist.

7. Bewegliche Handlaufvorrichtung eines Personenbeförderers nach einem der Ansprüche 1 bis 4, ferner umfassend:
eine Führungsschiene (13), die mit der Innenfläche des beweglichen Handlaufs (8) von der in dem beweglichen Handlauf (8) ausgebildeten Öffnung (8a) in Kontakt kommt und die Bewegung des beweglichen Handlaufs (8) führt; und
wobei die Führungsschiene (13) mit dem an der Innenfläche des beweglichen Handlaufs (8) ausgebildeten Niedrigreibungsabschnitt in Kontakt kommt und nicht mit dem Hochreibungsabschnitt in Kontakt kommt.

8. Bewegliche Handlaufvorrichtung eines Personenbeförderers nach Anspruch 7, wobei die Führungsschiene (13) derart ist, dass an einer Stelle, die einem an der Innenfläche des beweglichen Hochlaufs (8) ausgebildeten Hochreibungsabschnitt gegenüberliegend ist, eine Ausnehmung (13a) ausgebildet ist, die eine größere Breite als der Hochreibungsabschnitt aufweist.

9. Verfahren zum Herstellen eines Handlaufs für Personenbeförderer, umfassend:
Vorbereiten eines Niedrigreibungselements (16), in dem eine große Anzahl von Durchgangsbohrungen (16a) entlang einer Längsrichtung ausgebildet ist;
Ausbilden eines Handlaufhauptkörpers mit einem C-förmigen Querschnitt, sodass das Niedrigreibungselement (16) zumindest als Teil einer Innenfläche vorgesehen ist, indem ein bestimmtes Rohmaterial mit Reibungseigenschaften, die nach dem Formen in zumindest einem Teil des Handlaufhauptkörpers höher sind als die Reibungseigenschaften des Niedrigreibungselements (16), verwendet wird; und **gekennzeichnet ist durch**:
Bilden des Hochreibungsabschnitts, der aus dem bestimmten Rohmaterial hergestellt ist, an der Innenfläche des Handlaufhauptkörpers entlang der Längsrichtung des Handlaufhauptkörpers, indem das bestimmte Rohmaterial an einer Stirnfläche des Niedrigreibungselements (16) so vorgesehen wird, dass es von der Stirnfläche des Niedrigreibungselements (16) vorsteht, indem das bestimmte Rohmaterial dazu gebracht wird, **durch** die in dem Niedrigreibungselement (16) ausgebildeten Durchgangsbohrungen (16a) hindurchzustehen.

10. Verfahren zum Herstellen eines Handlaufs für Personenbeförderer nach Anspruch 9, ferner umfassend:
Bewirken, dass ein bestimmtes Rohmaterial mit einer ausgezeichneten Haftwirkung an ein Rohmaterial, das den Handlaufhauptkörper bildet, in das Niedrigreibungselement (16) imprägniert wird oder Beschichten des Niedrigreibungselements (16) mit dem bestimmten Rohmaterial, bevor der Handlaufhauptkörper gebildet wird.

11. Verfahren zum Herstellen eines Handlaufs für Personenbeförderer nach Anspruch 9, ferner umfassend:
Integrieren dehnbarer Körper (15) innerhalb des Handlaufhauptkörpers durch die Verwendung eines bestimmten Rohmaterials mit ausgezeichneter Haftwirkung an ein Rohmaterial, das den Handlaufhauptkörper ausbildet, bevor der Handlaufhauptkörper gebildet wird.

12. Verfahren zum Herstellen eines Handlaufs für Personenbeförderer nach einem der Ansprüche 9 bis 11, wobei durch Ausbilden des Handlaufhauptkörpers durch Extrusion, der Hochreibungsbereich auf der Innenfläche des Handlaufhauptkörpers zur gleichen Zeit gebildet wird, zu der der Handlaufhauptkörper geformt wird.

## Revendications

1. Dispositif de main-courante mobile de transporteur de passagers disposant d'une main-courante mobile sans fin (8) présentant une section transversale en forme de C, comprenant :
une partie à friction élevée qui est formée sur une surface interne de la main-courante mobile (8) le long d'une direction longitudinale de la main-courante mobile (8) ; et
une partie à faible friction qui est formée sur la surface interne de la main-courante mobile (8) le long d'une direction longitudinale de la main-courante mobile (8) et qui présente des propriétés de friction inférieures à celles de la partie à friction élevée, dans lequel
la main-courante mobile (8) comprend
un corps central (14) qui présente une section transversale en forme de C et une surface externe (14a) formant une surface de préhension, et
un élément à faible friction (16) disposé sur une surface interne du corps central (14) le long d'une direction longitudinale du corps central (14) et dans lequel un nombre important de trous traversants (16a) sont formés le long de la direction longitudinale du corps central (14), dans lequel
la partie à faible friction est formée à partir d'une portion de l'élément à faible friction (16), **caractérisé en ce que**
la partie à friction élevée est formée à partir d'une portion du corps central (14) qui est agencée sur une surface avant de l'élément à faible friction (16) afin d'être en saillie à partir de la surface avant de l'élément à faible friction (16) en passant à travers les trous traversants (16a) formés dans l'élément à faible friction (16).

2. Dispositif de main-courante mobile de transporteur de passagers selon la revendication 1, dans lequel la partie à friction élevée est agencée le long de la direction longitudinale de la main-courante mobile (8) afin d'être opposée à une ouverture (8a) formée dans la main-courante mobile (8) ; et la partie à faible friction est agencée sur les deux côtés de la partie à friction élevée le long de la direction longitudinale de la main-courante mobile (8).

3. Dispositif de main-courante mobile de transporteur de passagers selon la revendication 1 ou 2, dans lequel la partie à faible friction est formée à partir d'au moins un élément parmi le groupe consistant en une feuille contenant des fibres de fluororésine, un feutre contenant des fibres de fluororésine et un tissu tissé ou un tissu à mailles contenant des fibres de fluororésine.

4. Dispositif de main-courante mobile de transporteur de passagers selon l'une quelconque des revendications 1 à 3, dans lequel la partie à friction élevée est faite en un élastomère polyuréthane.

5. Dispositif de main-courante mobile de transporteur de passagers selon l'une quelconque des revendications 1 à 4, comprenant en outre :
un rouleau d'entrainement (19) qui vient en contact avec la surface interne de la main-courante mobile (8) à partir de l'ouverture (8a) formée dans la main-courante mobile (8) et entraine la main-courante mobile (8) grâce à une force de friction lors d'une rotation ; et
dans lequel le rouleau d'entraînement (19) vient en contact avec la partie à friction élevée formée sur la surface interne de la main-courante mobile (8) et ne vient pas en contact avec la partie à faible friction.

6. Dispositif de main-courante mobile de transporteur de passagers selon la revendication 5, comprenant en outre :
un rouleau de pression (20) qui presse la main-courante mobile (8) contre un côté du rouleau d'entraînement (19) en venant en contact avec la surface de préhension de la main-courante mobile (8); et
dans lequel le rouleau d'entraînement (19) est tel qu'une partie qui vient en contact avec la partie à friction élevée est faite en un métal, et
le rouleau de pression (20) est tel qu'une partie qui vient en contact avec la surface de préhension est faite en un corps élastique (20a) en résine ou analogue.

7. Dispositif de main-courante mobile de transporteur de passagers selon l'une quelconque des revendications 1 à 4, comprenant en outre :
un rail de guidage (13) qui vient en contact avec la surface interne de la main-courante mobile (8) à partir de l'ouverture (8a) formée dans la main-courante mobile (8) et guide le déplacement de la main-courante mobile (8) ; et
dans lequel le rail de guidage (13) vient en contact avec la partie à faible friction formée sur la surface interne de la main-courante mobile (8) et ne vient pas en contact avec la partie à friction élevée.

8. Dispositif de main-courante mobile de transporteur de passagers selon la revendication 7, dans lequel le rail de guidage (13) est tel que dans une position opposée à la partie à friction élevée formée sur la surface interne de la main-courante mobile (8), une concavité (13a) est formée, présentant une plus grande largeur que la partie à friction élevée.

9. Procédé de fabrication d'une main-courante de transporteur de passagers, comprenant :
la préparation d'un élément à faible friction (16) dans lequel un nombre important de trous traversants (16a) sont formés le long d'une direction longitudinale ;
la formation d'un corps principal de main-courante présentant une section transversale en forme de C de sorte que l'élément à faible friction (16) est agencé au moins en tant qu'une portion d'une surface interne en utilisant une matière première prescrite ayant des propriétés de friction après formation plus élevées que les propriétés de friction de l'élément à faible friction (16) dans au moins une portion du corps principal de main-courante ; et **caractérisé par** :
la formation d'une partie à friction élevée faite en la matière première prescrite sur la surface interne du corps principal de main-courante le long de la direction longitudinale du corps principal de main-courante en agençant la matière première prescrite sur une surface avant de l'élément à faible friction (16) afin d'être en saillie à partir de la surface avant de l'élément à faible friction (16) en faisant passer la matière première prescrite à travers les trous traversants (16a) formés dans l'élément à faible friction (16).

10. Procédé de fabrication d'une main-courante de transporteur de passagers selon la revendication 9, comprenant en outre :
le fait d'amener une matière première prescrite présentant une adhésion excellente à une matière première constituant le corps principal de main-courante à être imprégnée dans l'élément à faible friction (16) ou la réalisation d'un revêtement de l'élément à faible coefficient de friction (16) avec la matière première prescrite avant la formation du corps principal de main-courante.

11. Procédé de fabrication d'une main-courante de transporteur de passagers selon la revendication 9, comprenant en outre :
l'intégration de corps extensibles (15) à agencer à l'intérieur du corps principal de main-courante par l'utilisation d'une matière première prescrite présentant une adhésion excellente à une matière première constituant le corps principal de main-courante avant la formation du corps principal de main-courante.

12. Procédé de fabrication d'une main-courante de transporteur de passagers selon l'une quelconque des revendications 9 à 11, dans lequel en formant le corps principal de main-courante par extrusion, la partie à friction élevée est formée sur la surface interne du corps principal de main-courante au même moment lors du moulage du corps principal de main-courante.
